# EUROPÄISCHE PATENTSCHRIFT

(11) **EP 2 916 941 B1**
(45) Veröffentlichungstag und Bekanntmachung des Hinweises auf die Patenterteilung: **14.09.2016**
(21) Anmeldenummer: 13817845.4
(22) Anmeldetag: 11.11.2013
(51) Int. Cl.: B01J 8/34

(54) **WIRBELSCHICHTREAKTORSYSTEM**
FLUIDISED BED REACTOR SYSTEM
SYSTÈME DE RÉACTEURS À LIT FLUIDISÉ

(30) Priorität: 12.11.2012 AT 12022012
(43) Veröffentlichungstag der Anmeldung: 16.09.2015
(73) Patentinhaber: Technische Universität Wien, 1040 Wien (AT)
(72) Erfinder: SCHMID, Johannes, A-1050 Wien (AT); PRÖLL, Tobias, A-1140 Wien (AT); HOFBAUER, Hermann, A-1160 Wien (AT)
(74) Vertreter: Ellmeyer, Wolfgang
(86) Internationale Anmeldenummer: PCT/AT2013/050216
(87) Internationale Veröffentlichungsnummer: WO 2014/071436

(56) Entgegenhaltungen:
- WO-A1-94/25148
- WO-A1-2012/009737
- AT-A4- 509 586
- DE-A1- 19 700 029

## Beschreibung

Die Erfindung betrifft ein Wirbelschichtreaktorsystem zur Durchführung chemischer oder physikalischer Reaktionen, das einen oder mehrere schnell fluidisierte Wirbelschichtreaktoren umfasst.

### STAND DER TECHNIK

Sowohl bei physikalischen Verfahren als auch bei chemischen Reaktionen, bei denen es zu einem Stoffaustausch zwischen zwei Phasen kommen soll, sind möglichst große Kontaktoberflächen und gute Durchmischung der Phasen ebenso entscheidend wie lange Verweilzeiten in entsprechenden Kontakt- oder Reaktionszonen, um hohe Umsätze und Ausbeuten zu erzielen. Dies gilt gleichermaßen für alle Phasenübergänge, unabhängig davon, ob es sich um feste, flüssige oder gasförmige Phasen handelt, zwischen denen der Stoffaustausch stattfinden soll.

Eine Möglichkeit zur Verlängerung der Kontaktzeiten und zur Erhöhung der Kontaktoberfläche bzw. der Anzahl an Kontakten mit diskreten Partikeln im Falle von Fest-Flüssig- und Fest-Gasförmig-Kontakten besteht in der Führung der beiden zu kontaktierenden Phasen im Gegenstrom, wie dies beispielsweise für Sprühkolonnen, (mitunter mehrstufige) Fließbettreaktoren, Gegenstromkontaktoren und gepackte Säulen von A.W.M. Roes und W.P.M. Van Swaaij, Chem. Eng. J. 17, 81-89 (1979), beschrieben wird. Als spezielles Beispiel für Pyrolysereaktionen und Wärmeübertragungsvorgänge wird das Gegenstromprinzip in DE 10 2007 005 799 A1 (veröffentlicht am 24. April 2008) beschrieben. Hier wird Pyrolysekoks als Brennstoff in ein wasserstoffreiches Produktgas mit hohem Heizwert übergeführt, wobei ein als Wärmeträger dienendes Schüttgut mittels eines Schüttgutförderers zirkuliert und im Gegenstrom zu dem das Produktgas enthaltenden Gasstrom geführt wird.

Eine weitere Möglichkeit zur Vergrößerung der Oberfläche, die von Roes und Van Swaaij (s.o.) ebenfalls angedeutet wird, ist das Vorsehen von Einbauten, wie sie auf dem Gebiet der gepackten Säulen, Füllkörper- oder Drehtellerkolonnen hinlänglich bekannt sind.

Eine Erhöhung der Verweilzeiten in Kontaktoren oder Reaktoren kann beispielsweise auch durch Vorsehen von Strömungsreglern oder -begrenzern erzielt werden, wodurch Zonen unterschiedlicher Strömungsgeschwindigkeiten der miteinander zu kontaktierenden Phasen geschaffen werden. Als Beispiel für einen derartig konzipierten Fließbettreaktor siehe Kersten et al., Chem. Eng. Sci. 58, 725-731 (2003). Hier wird ein zirkulierender Wirbelschichtreaktor zur Biomassevergasung beschrieben, der durch eine regelmäßige Abfolge von konischen Erweiterungen im Steigrohr ("riser") in Zonen unterschiedlicher Dichte sowohl des zirkulierten Feststoffs als auch der Träger- und Verbrennungsgase unterteilt ist, wobei Feststoffpartikel und Gase im Steigrohr im Gleichstrom geführt werden. Durch die hohen Geschwindigkeiten in den vergleichsweise sehr engen Steigrohren jeweils unterhalb der konischen Erweiterungen ist eine Partikelbewegung nach unten nicht möglich. Man spricht hier von in Serie geschalteten Sprudelschichten ("spouted beds"). Ein ähnliches Beispiel für eine Verbesserung des Strömungsprofils in einem Wirbelschichtreaktor wird von J. Bu und J.-X. Zhu, Canadian J. Chem. Eng. 77, 26-34 (Februar 1999), beschrieben, wo im Steigrohr eines zirkulierenden Wirbelschichtreaktors ringförmige Einbauten vorgesehen sind, die eine vergleichbare Wirkung haben wie die konischen Erweiterungen gemäß Kersten et al. (s.o.).

Für Wirbelschichtreaktorsysteme, bei denen zwei oder mehrere fluidisierte Reaktoren miteinander kommunizieren, sind die obigen Maßnahmen zur Verbesserung des Kontakts oder Stoffaustauschs zwischen zwei Phasen, konkret zwischen einer festen und einer flüssigen oder gasförmigen Phase, kaum bekannt. So beschreiben etwa Berguerand und Lyngfelt in Fuel 87, 2713-2726 (2008), das Vorsehen einer abwechselnden Anordnung von Über- und Unterlaufwehren in einem Wirbelschichtreaktorsystem mit zwei Fließbettreaktoren. Diese als Partikelsperre ("particle lock") bezeichnete Anordnung dient allerdings lediglich zur Trennung von Partikeln unterschiedlicher Dichte und nicht zur Fördernung des Kontakts zwischen den Partikeln und der Gasphase.

US 3.353.925 offenbart mehrere "düsenartige" Einschnürungen im Querschnitt eines schnell fluidisierten Reaktors in einem Wirbelschichtsystem, das darüber hinaus noch zwei nicht partikeltransportierende Reaktoren umfasst. Diese Einschnürungen sollen den Kontakt von Gas und Partikeln verbessern, die in diesem Fall im Gleichstrom geführt werden.

Bi et al. offenbaren in Ind. Eng. Chem. Res. 43(18), 5611-5619 (2004) Einbauten, die als Prallbleche ("baffles") bezeichnet werden und dazu dienen, in einem stationären, d.h. blasenbildenden Wirbelschichtbett ("bubbling bed") größere aufsteigende Blasen zu zerstören und in kleinere Blasen zu zerteilen, um die Homogenität des Betts zu erhöhen.

Und schließlich haben die Erfinder des vorliegenden Anmeldungsgegenstands selbst in früheren Forschungsarbeiten ein Wirbelschichtreaktorsystem entwickelt, das zumindest zwei als schnell fluidisierte Wirbelschichten ausgeführte Reaktoren umfasst, wobei in zumindest einem davon durch einen oder mehrere Strömungsregler voneinander getrennte Reaktionszonen vorgesehen sind und die Partikelleitung zum Transport von Wirbelschichtpartikeln von anderen in diesen Reaktor oberhalb zumindest eines Strömungsreglers einmündet (PCT/AT2011/000254). Ein Beispiel für ein solches System ist hierin in Fig. 1 dargestellt und wird später noch näher beschrieben. Die Art der Strömungsregler ist dabei nicht speziell eingeschränkt, so dass beliebige Verengungen oder Erweiterungen des Reaktorquerschnitts, Umlenkungen des Partikelstroms sowie beliebige Kombinationen davon vorgesehen sein können, etwa auch ein "Zickzack"-Verlauf des Reaktorrohrs oder das Vorsehen diverser Einbauten, wie z.B. zentraler oder seitlicher Prallflächen, ringförmiger Einschnürungen usw., die zudem in beliebigem Winkel zur Strömungsrichtung stehen können. Die Art der jeweiligen Strömungsregler wird dabei hauptsächlich durch den Verwendungszweck des Wirbelschichtreaktorsystems und durch das jeweils einsetzbare Reaktorwandmaterial vorgegeben.

Der Hauptnachteil aller bekannten Ausführungsformen von Strömungsreglern in Wirbelschichtreaktoren ist allerdings, dass nach erfolgtem Einbau in den oder die Reaktoren die Strömungswege darin fest vorgegeben sind, so dass für jegliche Änderungen daran ein Umbau des Reaktorsystems erforderlich ist, wofür natürlich das System abgeschaltet werden muss.

Ziel der Erfindung war vor diesem Hintergrund die Entwicklung eines flexibleren Wirbelschichtreaktorsystems mit variierbaren Strömungswegen.

### OFFENBARUNG DER ERFINDUNG

Dieses Ziel erreicht die vorliegende Erfindung durch Bereitstellung eines Wirbelschichtreaktorsystems, das einen oder mehrere Wirbelschichtreaktoren zur Durchführung chemischer oder physikalischer Reaktionen umfasst, wovon zumindest ein Reaktor als schnell fluidisierter Reaktor zum Betrieb als zirkulierende Wirbelschicht ausgeführt ist und am oberen Ende einen Fluidauslass, einen Partikelabscheider und eine damit verbundene Partikelleitung zur Rückführung abgeschiedener Wirbelschichtpartikel in denselben oder einen weiteren Reaktor umfasst, wobei in zumindest einem schnell fluidisierten Reaktor ein oder mehrere Strömungsregler vorgesehen sind, um darin voneinander getrennte Reaktionszonen zu erzeugen, wobei das erfindungsgemäße System dadurch gekennzeichnet ist, dass zur Regelung der Strömungsverhältnisse in den Reaktionszonen einer oder mehrere der Strömungsregler von außerhalb des Systems gezielt verstellbar ist/sind.

Durch dieses Vorsehen gezielt verstellbarer Strömungsregler können der Strömungsweg und/oder die Strömungsgeschwindigkeit der fluidisierten Wirbelschicht an dieser Stelle im jeweiligen Reaktor geregelt werden. Dadurch ist es erstmals möglich, die Strömungseigenschaften der Wirbelschicht in einem so ausgerüsteten Wirbelschichtreaktor bei laufendem Betrieb gezielt zu beeinflussen, d.h. zu regeln, was die Flexibilität deutlich erhöht. Zeit- und kostenaufwändiges Abschalten des Systems zum Vorsehen oder Austausch entsprechender Reaktoreinbauten erübrigen sich damit.

In der einfachsten Ausführungsform der Erfindung mit nur einem schnell fluidisierten Wirbelschichtreaktor, der auch der einzige Reaktor des Systems sein kann, kann die Wirbelschicht durch das Verstellen eines solchen gezielt verstellbaren Strömungsreglers der Erfindung bevorzugt in bestimmte Regionen des Reaktors - oder, genauer gesagt, einer unmittelbar darüber liegenden Reaktionszone - geleitet werden, die in der Ausgangsposition des Strömungsreglers weniger stark von Wirbelschichtpartikeln durchströmt waren. In bevorzugten Ausführungsformen der Erfindung ist durch das Verstellen eines solchen gezielt verstellbaren Strömungsreglers die horizontale Querschnittsfläche des jeweiligen Reaktors auf Höhe dieses Strömungsreglers veränderbar, was eine Erhöhung oder Verringerung der Strömungsgeschwindigkeit an dieser Stelle bewirkt, was wiederum zur Folge hat, dass sich mehr oder weniger Partikel in der unmittelbar darüber liegenden Reaktionszone aufhalten.

In anderen bevorzugten Ausführungsformen der Erfindung sind die Strömungsregler nicht (oder nicht nur) horizontal, sondern (auch) vertikal verstellbar, wodurch die Größe der darüber bzw. - bei Vorliegen mehrerer Strömungsregler - dazwischen liegenden Reaktionszonen steuerbar ist. Auch Gemische horizontal und vertikal verstellbarer Strömungsregler in einem Wirbelschichtreaktorsystem, mitunter in ein und demselben Wirbelschichtreaktor, sind möglich, und, wie zuvor angedeutet, kann ein Strömungsregler auch sowohl horizontal als auch vertikal verstellbar sein. Ziel ist in jedem Fall die Einstellung des fluiddynamisch vorteilhaftesten Zustands in der jeweiligen Reaktionszone, im entsprechenden Reaktor und damit auch im gesamten Wirbelschichtreaktorsystem.

Die Art und Weise, wie die gezielt verstellbaren Strömungsregler in ihrer Position veränderbar sind, ist nicht speziell eingeschränkt, solange die Positionsänderung und die damit verbundene Änderung der Strömungsverhältnisse an dieser Stelle gezielt herbeiführbar sind. Ein einfaches Verkippen oder Verdrehen aufgrund von erstmaligem Kontakt mit den Wirbelschichtpartikeln beim Aufnahme des Betriebs des Wirbelschichtreaktors ist jedoch nicht darunter zu verstehen. Allerdings können in einer Ausführungsform der Erfindung einer oder mehrere der erfindungsgemäß gezielt verstellbaren Strömungsregler so beschaffen und montiert sein, dass sie ein Hindernis für die Wirbelschicht-Strömung darstellen, solange nicht ein gewisses Maß an Fluidisierung erreicht und ein dementsprechender Druck auf die Strömungsregler ausgeübt wird. Sobald dieser Druck jedoch erreicht ist, können sich die Strömungsregler bewegen, d.h. sie klappen oder kippen oder drehen sich zur Seite, wodurch das Strömungshindernis entfernt oder zumindest verringert wird und die Wirbelschicht einen anderen Strömungsweg einschlagen und/oder eine andere Strömungsgeschwindigkeit annehmen kann als davor.

Generell können die gezielt verstellbaren Strömungsregler händisch verstellbar oder auch motorgetrieben sein, wobei auch beide Varianten innerhalb eines Reaktors oder Reaktorsystems möglich sind. Nach einer solchen gezielten Verstellung können die Strömungsregler mitunter auch automatisch eine bestimmte Position einnehmen, um den gewünschten Strömungszustand aufrechtzuerhalten Die oben beschriebene Abhängigkeit der Strömungsregler von der Stärke des Stroms des Fluidisierungsgases der Wirbelschicht stellt einen Spezialfall von händischer Verstellbarkeit dar, da der Gasstrom ja üblicherweise von außen gezielt regelbar ist. Ansonsten können etwa beliebige Arten von Hebeln, Drehrädern oder Schiebern oder dergleichen an den Strömungsreglern vorgesehen sein, um diese händisch von außen verstellen zu können. Oder die Strömungsregler sind mittels eines, z.B. elektrischen, hydraulischen oder pneumatischen, Motors antreibbar, der eine Bewegung und eine damit einhergehende Positionsänderung der Strömungsregler bewirkt.

Vorzugsweise sind die gezielt verstellbaren Strömungsregler der Erfindung an oder in der jeweiligen Reaktorwand drehbar, verschwenkbar und/oder verschiebbar gelagert, wie dies beispielsweise aus den beiliegenden Zeichnungen hervorgeht. Die Richtung der Bewegung ist dabei nicht eingeschränkt, solange der Betrieb des Wirbelschichtreaktors nicht beeinträchtigt wird. Das bedeutet, dass die verstellbaren Strömungsregler in alle drei Raumrichtungen bewegbar, also vorzugsweise drehbar, verschwenkbar und/oder verschiebbar sein können. Auch ihre Größe ist frei wählbar, solange der Reaktorbetrieb wie gewünscht aufrechterhalten werden kann. In manchen Ausführungsformen kann somit mitunter auch der gesamte Reaktorquerschnitt von einem Strömungsregler verschlossen sein, bis Letzterer in eine andere Position bewegt wird, so z.B. in dem oben beschriebenen Spezialfall, wo die Bewegung des Strömungsreglers durch Ausübung eines bestimmten Drucks der fluidisierten Wirbelschicht auf den Strömungsregler herbeigeführt wird, oder etwa bei Vorsehen eines verstellbaren Strömungsreglers, der aus einer Anordnung von einander überlappenden Lamellen besteht, die (ähnlich dem Lamellenverschluss einer Kamera) von einem Motor bewegt werden. Auch der mittels Druck der Wirbelschicht bewegte Strömungsregler kann Lamellen umfassen, die bei ausreichend hohem Fluidisierungsdruck nach oben aufklappen und bei einem Absinken des Drucks unter den Schwellenwert den Querschnitt wieder, ganz oder teilweise, verschließen.

Generell ist die Art und Form der gezielt verstellbaren Strömungsregler nicht speziell eingeschränkt. Neben den bereits beschriebenen Ausführungsformen mit Lamellen kommen diverseste Arten von Bauteilen, wie z.B. Schieber, Klappen, Walzen oder dergleichen in Frage, die ihrerseits wiederum beliebig geformt sein können, solange sie in der Lage sind, den Strömungsweg und/oder Strömungsquerschnitt für die Wirbelschicht regelbar zu beeinflussen. Sie können dabei strömungstechnisch vorteilhafte Querschnittsformen, also Formen mit niedrigem Strömungswiderstand, wie z.B. kreisrund, oval oder kugelförmig, aufweisen oder auch solche mit vergleichsweise hohem Strömungswiderstand, wie z.B. scharfkantige Formen. In manchen Ausführungsformen können die Strömungsregler auch ein Gemisch beider Varianten darstellen, d.h. beispielsweise in der Position, in der die Wirbelschicht sie möglichst ungehindert passieren soll, ein strömungstechnisch günstiges Profil aufweisen, in der Position, in der die Wirbelschicht teilweise blockiert werden soll, hingegen ein Profil mit hohem Strömungswiderstand. Ganz allgemein sind hohe Strömungswiderstände in Wirbelschichtreaktoren natürlich nicht bevorzugt, um den Druck des Fluidisierungsgases gering halten zu können, weswegen gemäß vorliegender Erfindung Strömungsregler mit niedrigem Strömungswiderstand zu bevorzugen sind, die ihre Wirkung vor allem durch die Verringerung des Strömungsquerschnitts entfalten. Besonders bevorzugte Beispiele sind in den beiliegenden Zeichnungen dargestellt, die später noch näher erläutert werden.

In einem erfindungsgemäßen Wirbelschichtreaktorsystem können auch sowohl ein oder mehrere gezielt verstellbare als auch ein oder mehrere nach dem Stand der Technik bekannte, ortsfest montierte Strömungsregler, wie sie eingangs beschrieben wurden, vorgesehen sein, und zwar sowohl in getrennten Reaktoren als auch innerhalb desselben Reaktors.

Das Material beider Arten von Strömungsreglern ist nicht speziell eingeschränkt. Dasselbe gilt für das Material der Reaktorwände. Beispielsweise kommen für CLR-, CLC-, Vergasungs- oder andere, Hochtemperaturen erfordernde Anwendungen vorwiegend Feuerfeststoffe und andere temperaturbeständige Materialien, wie z.B. Schamotte-Ziegel, hitzebeständiger Stahl, Beton, Keramik oder auch Graphit, als Wandmaterial zum Einsatz, und auch die Strömungsregler, verstellbar oder nicht, sind vorzugsweise aus solchen Materialien gefertigt, um lange Haltbarkeit zu gewährleisten. Dies umfasst sämtliche Bauteile der Strömungsregler, einschließlich etwaiger Lager, Scharniere, Achsen und dergleichen.

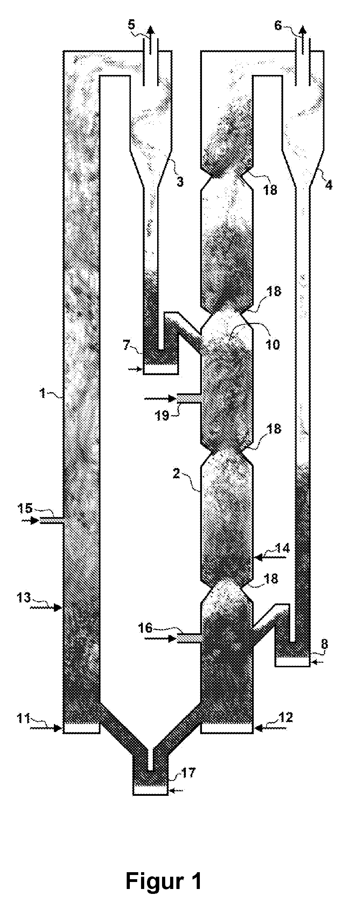

Wie erwähnt kann ein Wirbelschichtreaktorsystem der Erfindung nur einen einzigen Wirbelschichtreaktor oder nur einen einzigen schnell fluidisierten Wirbelschichtreaktor sowie einen oder mehrere andere Reaktoren, z.B. stationäre Wirbelschichtreaktoren, umfassen. Vorzugsweise umfasst ein erfindungsgemäßes Wirbelschichtreaktorsystem allerdings zumindest zwei Reaktoren, die beide als schnell fluidisierte Wirbelschichten ausgeführt sind, wobei eine Partikelleitung den Partikelabscheider des ersten Reaktors mit dem zweiten Reaktor verbindet, eine weitere Partikelleitung vom Partikelabscheider des zweiten Reaktors in den zweiten Reaktor zurückführt, und eine dritte Partikelleitung vom zweiten in den ersten Reaktor zurückführt (wobei die dritte Partikelleitung die beiden Reaktoren vorzugsweise in deren unteren Häften, noch bevorzugter unteren Dritteln oder Vierteln, miteinander verbindet), wobei zumindest im zweiten Reaktor ein oder mehrere gezielt verstellbare Strömungsregler vorgesehen sind. Ein Beispiel für ein derartiges System nach dem Stand der Technik, d.h. ohne die gezielt verstellbaren Strömungsregler der Erfindung ist, wie eingangs erwähnt, in Fig. 1 dargestellt und wird in der Folge noch näher beschrieben.

Gemäß vorliegender Erfindung wird bevorzugt, dass in beiden Reaktoren eines solchen Wirbelschichtreaktorsystems jeweils ein oder mehrere gezielt verstellbare Strömungsregler vorgesehen sind, um in beiden Reaktoren die Strömungsverhältnisse regeln zu können. Weiters mündet vorzugsweise zumindest eine Partikelleitung oberhalb zumindest eines Strömungsreglers in den jeweiligen Reaktor ein, um für eine bestimmte Konzentration von Partikeln in der Reaktionszone oberhalb des Strömungsreglers zu sorgen, ohne, zumindest kurzfristig, einen übermäßig hohen Massen- bzw. Volumenstrom des Fluidisierungsgases einstellen zu müssen, um ausreichend Partikel in diese Reaktionszone zu befördern.

Vorzugsweise sind zwei der Reaktoren des erfindungsgemäßen Wirbelschichtreaktorsystems zusätzlich durch eine im Wesentlichen nur Gas transportierende Leitung miteinander verbunden, wie dies die Erfinder des vorliegenden Anmeldungsgegenstands in früheren Forschungen herausgefunden haben (PCT/AT2011/000311) und hierin in Fig. 3 gezeigt und später im Zusammenhang damit auch noch näher erläutert wird.

Die Erfindung wird nachstehend unter Bezugnahme auf die beiliegenden Zeichnungen detaillierter beschrieben, die Folgendes zeigen:
Fig. 1 zeigt schematisch ein Wirbelschichtreaktorsystem nach dem Stand der Technik mit bekannten, nicht verstellbaren Strömungsreglern;
Fig. 2 zeigt schematisch eine einfache Ausführungsform des erfindungsgemäßen Wirbelschichtreaktorsystems mit nur einem Wirbelschichtreaktor, der mehrere gezielt verstellbare Strömungsregler enthält;
Fig. 3 zeigt schematisch eine Ausführungsform des erfindungsgemäßen Wirbelschichtreaktorsystems mit drei Reaktoren;
Fig. 4 zeigt schematisch eine weitere Ausführungsform des erfindungsgemäßen Wirbelschichtreaktorsystems mit drei Reaktoren; und
die Fig. 5 bis 7 zeigen schematisch verschiedene bevorzugte Ausführungsformen gezielt verstellbarer Strömungsregler.

### Definitionen

Unter einer "Wirbelschicht" ist hierin eine Schüttung von Feststoffpartikeln zu verstehen, die durch einen Fluidstrom in einen fluidisierten, d.h. fließfähigen, Zustand versetzt ist. Als solche "Fluids" dienen insbesondere reine Gase oder Gasgemische, allgemein sind hierin jedoch auch Gemische aus Gasen und Flüssigkeiten und/oder Feststoffen umfasst, wobei üblicherweise nur vergleichsweise geringe Mengen an Flüssigkeit (z.B. in Tröpfchenform) oder Feststoff im Fluidisierungsgas enthalten sind.

Wirbelschichten können entweder "stationär" oder "schnell fluidisiert" sein. In ersterem Fall besitzt die fluidisierte Schüttung eine deutlich sichtbare Grenze, und es werden nur relativ wenige Partikel zusammen mit dem Gasstrom daraus ausgetragen (z.B. blasenbildende oder stoßende Wirbelschichten). In zweiterem Fall werden laufend Partikel aus der Wirbelschicht nach oben ausgetragen, die - normalerweise über einen Abscheider - in das System rezykliert werden. Zirkulierende Wirbelschichten sind somit in jedem Fall schnell fluidisierte Wirbelschichten, und die beiden Begriffe werden hierin synonym gebraucht.

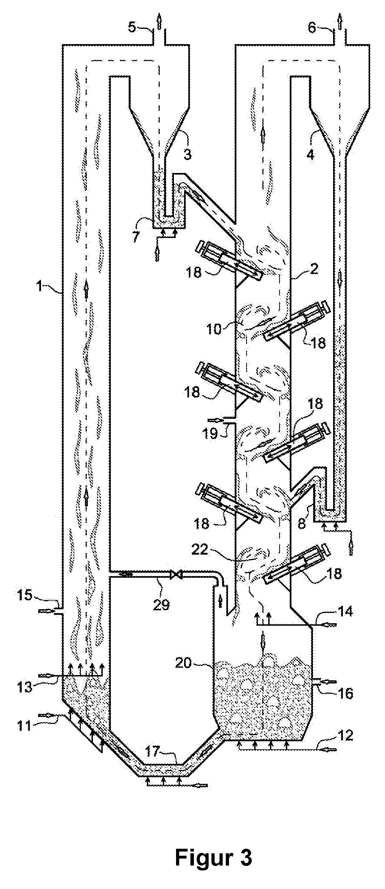

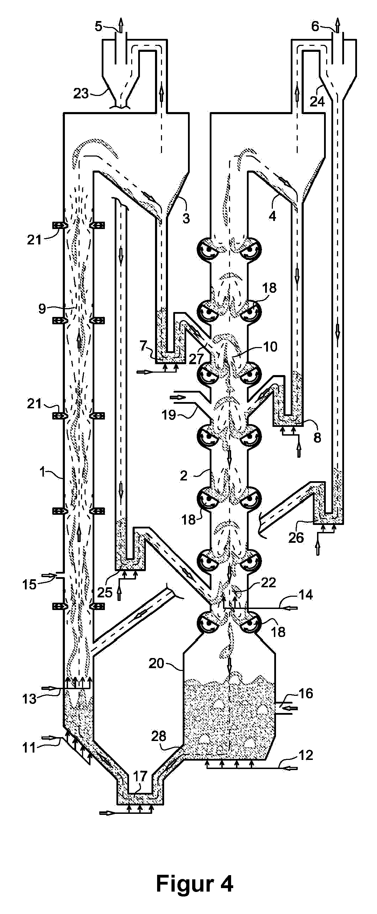

Ein Sonderfall einer stationären Wirbelschicht ist eine fluidisierte Schüttung, aus der zwar definitionsgemäß kein Austrag zusammen mit dem Gasstrom nach oben erfolgt, die jedoch laufend mit Partikeln, z.B. aus einer damit verbundenen schnell fluidisierten Wirbelschicht, gespeist wird und aus der laufend etwa dieselbe Menge an Partikeln (nach unten) abgezogen wird, um die Ausdehnung der Wirbelschicht im Wesentlichen konstant zu halten. Darauf wird in Zusammenhang mit den Fig. 3 und 4 noch näher eingegangen.

Unter einem "Wirbelschichtreaktor" oder kurz "Reaktor" ist hierin in begrenzter Bereich innerhalb eines Wirbelschichtsystems zu verstehen, in dem genau ein definierter Fluidisierungszustand, d.h. stationär oder schnell fluidisiert, herrscht und in dem chemische und/oder physikalische Reaktionen unter Kontakt mit den Wirbelschichtpartikeln ablaufen. Aufgrund des definierten Fluidisierungszustands innerhalb eines Reaktors werden die Begriffe "Wirbelschicht" und "Wirbelschichtreaktor" hierin mitunter synonym gebraucht.

Ein "Wirbelschichtreaktorsystem" ist eine einen oder mehrere Wirbelschichtreaktoren, samt zugehöriger Partikelabscheider, Verbindungs- und Versorgungsleitungen, einschließlich etwaiger Ventile, Strömungsregler und anderer Bauteile, umfassende Anlage zur Durchführung chemischer und/oder physikalischer Reaktionen. Umfasst das System mehr als einen schnell fluidisierten Wirbelschichtreaktor, stellen diese vorzugsweise voneinander getrennte Gasräume dar. Zur Gewährleistung der Trennung können Gassperren, wie z.B. Siphone, vorgesehen sein, die vorzugsweise auch selbst fluidisiert sind.

### DETAILLIERTE BESCHREIBUNG DER ERFINDUNG

In Fig. 1 ist, wie bereits erwähnt, ein Wirbelschichtreaktorsystem nach dem Stand der Technik schematisch dargestellt, das herkömmliche, nicht verstellbare Strömungsregler umfasst und das Ergebnis früherer Forschungsarbeiten der Erfinder ist (siehe PCT/AT2011/000254). Es umfasst zwei Reaktoren 1 und 2, die beide als schnell fluidisierte Wirbelschichten ausgeführt sind, deren Positionen (d.h. die Position der fluidisierten Partikel) mittels Punkten bzw. Grautönung dargestellt ist. Eine Partikelleitung 7 verbindet den Partikelabscheider 3 des ersten Reaktors mit dem zweiten Reaktor, eine weitere Partikelleitung 8 führt vom Partikelabscheider 4 des zweiten Reaktors in diesen Reaktor zurück, und eine dritte Partikelleitung 17 führt vom zweiten in den ersten Reaktor zurück. Diese dritte Partikelleitung 17 verbindet die beiden Reaktoren vorzugsweise in deren unteren Hälften, noch bevorzugter unteren Dritteln oder Vierteln, miteinander, wie die Erfinder in ihrer WO 2009/021258 A1 offenbaren, um die Partikelverteilung im System genauer steuern zu können. Insbesondere mündet Leitung 17 jeweils in Bodennähe aus Reaktor 2 aus und in Reaktor 1 ein, wie dies auch in Fig. 1 dargestellt ist.

Alle drei Partikelleitungen 7, 8 und 17 umfassen einen Siphon, der jeweils fluidisiert ist, wie durch die Pfeile angedeutet wird, um einerseits den Partikeltransport zu fördern und andererseits die Trennung der Gasräume der beiden Reaktoren zu gewährleisten. Die Reaktoren selbst sind jeweils gestuft fluidisiert, d.h. Fluidisierungsgas wird in Reaktor 1 sowohl an 11 als auch 13 und in Reaktor 2 an 12 und 14 eingeleitet und tritt an Auslass 5 bzw. 6 am Kopf des jeweiligen Abscheiders wieder aus dem System aus. Eine solche gestufte Fluidisierung ermöglicht eine exaktere Steuerung des Fluidisierungszustands der Reaktoren.

Reaktor 2 ist durch (nicht verstellbare) Strömungsregler 18, die hier schematisch als Einschnürungen des Reaktorquerschnitts dargestellt sind, in mehrere, übereinander liegende Reaktionszonen 10 unterteilt, deren Zweck nachstehend anhand eines konkreten Anwendungsbeispiels für ein solches Wirbelschichtreaktorsystem, nämlich für Chemical Looping Reforming (CLC) erläutert wird.

An 16 und 19 sind Zuleitungen zum Reaktor 2 eingezeichnet, die für das Beispiel CLC Brennstoffzuleitungen sind. So kann beispielsweise an 16 ein gasförmiger Brennstoff wie etwa Methan eingeleitet werden, während an 19 ein zumindest teilweise aus Feststoffen bestehender Feed, z.B. Kohle, zugeführt werden kann. Es ist aber auch eine gleichzeitige Umwandlung zweier verschiedener Festbrennstofffraktionen möglich, die unterschiedliche Verweilzeiten innerhalb des Reaktors 2 benötigen um effizient umgewandelt werden zu können. Während über 16 ein schnell entgasender Brennstoff, wie z.B. Kunststoffmüll, zugeführt wird, können über 19 beispielsweise wiederum Kohlepartikel eingetragen werden. Über die Zuleitung 15 kann auch in Reaktor 1 ein Feed, wie z.B. ein Brenngas, eingeleitet werden.

Als Ganzes betrachtet kann in dem in Fig. 1 gezeigten Wirbelschichtreaktorsystem für das Beispiel CLC ein partikulärer Sauerstoffträger im Luftreaktor 1 (re-)oxidiert und erhitzt werden, wonach er über Partikelleitung 7 in eine Reaktionszone 10 des Brennstoffreaktors 2 eingespeist wird, von wo er innerhalb der Wirbelschicht dieses Reaktors bevorzugt nach unten sinkt und dabei in den einzelnen Reaktionszonen für die Oxidation, d.h. Verbrennung, eines oder mehrerer Brennstoffe sorgt, die an 16 und/oder 19 eingespeist werden. Anschließend wird der Sauerstoffträger in den Luftreaktor 1 zurückgeführt und dort regeneriert. In Brennstoffreaktor 2 können feste, aber relativ feinteilige Verbrennungsrückstände, wie z.B. Flugasche bei der Verbrennung von Kohle, an Partikelabscheider 4 aufgefangen und über Partikelleitung 8 in das System zurückgeführt werden, wo sie erneut mit dem Sauerstoffträger in Kontakt kommen, was eine vollständige Verbrennung des Brennstoffs gewährleistet. Gleichzeitig kann aber auch ein weiterer, z.B. gasförmiger Brennstoff wie etwa Methan, eingespeist werden, so dass in den einzelnen Reaktionszonen 10 unterschiedliche Mengen verschiedener Reaktionspartner vorliegen, wodurch darin auch unterschiedliche Temperaturen herrschen und unterschiedliche Summenreaktionen ablaufen können. Diese erzeugen beispielsweise variierende Wärmemengen und variierende Größen der festen Reaktionsprodukte, je nach der Lage der jeweiligen Reaktionszone. In Summe werden durch die Strömungsregler die Vollständigkeit der Verbrennungsreaktionen und damit die Ausbeuten und die Effizienz des Prozesses insgesamt gefördert.

Der Nachteil dieser Ausführungsform eines Wirbelschichtreaktorsystems liegt nun jedoch darin, dass die Steuerung des Partikelkreislaufs insgesamt und der Menge an Partikeln in den einzelnen Reaktionszonen praktisch ausschließlich über die Mengen an Fluidisierungsgas erfolgen kann, die an den Positionen 11 bis 14 in die Reaktoren eingeleitet werden oder auch innerhalb des Systems entstehen. Der Gesamt-Partikelkreislauf und die Partikelmengen in den einzelnen Reaktionszonen können zudem nicht unabhängig voneinander geregelt werden. Nach erfolgtem Einbau der Strömungsregler in Reaktor 2 sind die durch Variation der Fluidisierung erreichbaren Strömungszustände fix vorgegeben.

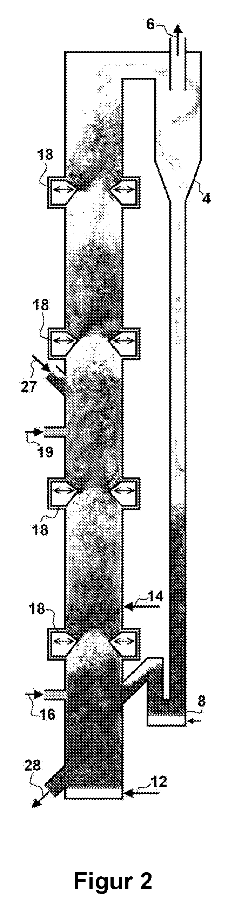

Eine Beispiel für die Lösung dieser Problematik gemäß vorliegender Erfindung ist in Fig. 2 in Form einer relativ einfachen Ausführungsform der Erfindung dargestellt. Das hier gezeigte Wirbelschichtreaktorsystem umfasst einen einzigen Reaktor, der ähnlich zu Reaktor 2 des Systems aus Fig. 1 gestaltet und nummeriert ist. Er umfasst eine schnell fluidisierte Wirbelschicht, die mittels Zufuhr von Fluidisierungsgas an 12 und 14 zum einer partikulären Schüttung erzeugt wird. Wie zuvor erfolgt der Gasaustritt an Position 6, während Partikel über Abscheider 4, der beispielsweise ein Zyklon sein kann, und Leitung 8 rezykliert werden. An Position 16 und 19 können wiederum (gleiche oder unterschiedliche) Feeds eines im Reaktor zu behandelnden Rohmaterials zugeführt werden, während Zuleitung 27 beispielsweise zur Ergänzung von durch Abrieb verlorengegangener Anteile des partikulären Bettmaterials dienen kann und über Ableitung 28 grobe Teilchen, z.B. bei einer Verbrennung des Feeds anfallende Grobasche, entfernt werden können.

Bei Einsatz eines solchen Wirbelschichtreaktorsystems für Verbrennungs- oder Vergasungsanwendungen könnten beispielsweise über Zuleitungen 16 und 19 Brennstoffe als Feed eingespeist werden, an Position 27 könnte, wie erwähnt, zusätzliches Bettmaterial - in diesem Fall beispielsweise Quarzsand und etwaige Additive, wie z.B. Dolomit - zugeführt werden, und bei 28 könnte die anfallende Grobasche des Brennstoffs abgezogen werden.

Bezugszeichen 18 kennzeichnet erneut Strömungsregler, die den Querschnitt des Reaktors an vorbestimmten Stellen einschränken und ihn so in mehrere Reaktionszonen unterteilen. Die vier eingezeichneten Strömungsregler 18 unterteilen den Reaktor somit in fünf Reaktionszonen mit unterschiedlichen Aufenthaltswahrscheinlichkeiten für das Bettmaterial und die Brennstoffpartikel. Im Gegensatz zum Stand der Technik sind diese Strömungsregler gemäß vorliegender Erfindung, die hier als Schieber dargestellt sind, jedoch gezielt verstellbar, wie dies durch die Pfeile angedeutet ist, wodurch - bei gleich bleibender Fluidisierung des Reaktors - die Menge an in den jeweils darüber liegenden Reaktionszonen sowie in der untersten Reaktionszone befindlichen Partikeln regelbar ist.

Da bei der thermischen Umsetzung fester Brennstoffpartikel - wie bei der Vergasung - Gase entstehen, hängt der jeweils auftretende Gesamt-Gasvolumenstrom (wie auch die Gasgeschwindigkeit) in der Wirbelschicht direkt mit der Gasproduktion innerhalb der jeweiligen Reaktionszone 10 zusammen. Bei Variationen des Festbrennstoffs in Bezug auf seine Stückigkeit (Partikelgröße), seinen Wassergehalt und Brennwert und seine flüchtigen Anteile ist das erfindungsgemäße Vorsehen von verstellbaren Strömungsreglern für die Wirbelschicht der Schlüssel für die gezielte Regelung mit dem Ziel, den Gas-Feststoff-Kontakt zu maximieren und höchstmögliche Verweilzeiten zu erreichen. Das gilt für die Gasphasenströmung ebenso wie für sämtliche Feststoffbewegungen (Bettmaterial, Additive, Brennstoffpartikel). Auf diese Weise kann das erfindungsgemäße Wirbelschichtreaktorsystem an unterschiedliche Gegebenheiten angepasst werden, beispielsweise auch an variierende Verhältnisse der beiden an 16 und 19 eingespeisten Feeds, ohne das System abschalten oder auch nur das Fluidisierungsausmaß verändern zu müssen. Im oben beschriebenen Anwendungsbeispiel für Vergasung könnte somit auf eine Verschiebung des Feedverhältnisses hin zu größeren Mengen an partikulärem Feed, wie z.B. Kohle oder Holzhackschnitzel, über Leitung 19 dadurch reagiert werden, dass die beiden untersten der gezielt verstellbaren Strömungsregler 18 nach innen und die beiden obersten Strömungsregler nach außen verschoben werden, wodurch sich die Strömungsgeschwindigkeit der Wirbelschicht an diesen Stellen anpassen lässt. Auskunft über die optimale Einstellung können einfache Druckmessungen über die gesamte Höhe des Reaktors 2 geben. Wie zuvor erwähnt kommt es in der Reaktionszone, in die Leitung 19 einmündet, zu einer Gasproduktion durch die Zersetzung des Festbrennstoffs (d.h. Entgasung der flüchtigen Festbrennstoffanteils). In der Folge kann in den oberen Zonen die Gasgeschwindigkeit innerhalb der Einschnürungen der Strömungsregler gezielt eingestellt werden, damit es zu keinem ungewollt hohen Partikelaustrag aus dem Reaktor 2 kommt. Gleichzeitig wird durch das gezielte Einstellen der unteren Strömungsregler ein ausreichend lange Verweilzeit für die noch verbliebenen, schwerer zu vergasenden Brennstoffpartikel innerhalb des Reaktors 2 gewährleistet. Daraus resultiert ein intensiverer Kontakt zwischen diesem Feed und dem Bettmaterial, was die Vollständigkeit der Reaktion insgesamt und damit die Ausbeuten erhöht.

Falls sich, bei Verbrennungs- oder Vergasungsanwendungen, andererseits das Verhältnis der beiden Feedströme in Richtung des über Leitung 16 eingespeisten, beispielsweise vorwiegend schnell entgasenden Feeds (d.h. Brennstoffs), verschiebt, können die Strömungsregler so eingestellt werden, dass sich eine optimale Durchmischung der Partikel in den darüber liegenden Reaktionszonen ergibt, um für intensiveren Kontakt dieses Feeds mit dem Bettmaterial zu sorgen. Das Erhöht die Effizienz der Vergasungs- bzw. Verbrennungsreaktionen und verringert bei der Vergasung die entstehenden Teere bzw. verringert andere Verunreinigungen durch den intensiven Kontakt mit dem Bettmaterial und Additiven. Das erfindungsgemäße Wirbelschichtreaktorsystem mit den gezielt verstellbaren Strömungsreglern ist somit um ein Vielfaches flexibler als die bekannten Systeme nach dem Stand der Technik. Die gezielte Anpassung der Reaktorgeometrie über die Strömungsregler im Hinblick auf unterschiedliche, örtlich vorhandene Gasvolumenströme über die Höhe des Reaktors, und das direkt im laufenden Betrieb der Wirbelschicht, ist der Kern der Erfindung. Gleichzeitig kann direkt und zeitnah auf eine Laständerung reagiert werden, die durch inhomogene Brennstoffe, wie z.B. Müll, auftreten und die bei Standard-Anlagen immer wieder zu Problemen führen. Zusätzlich ist eine gezielt angestrebte Teillast der Wirbelschicht möglich, ohne einen optimalen Betriebspunkt verlassen zu müssen, da ja die Geometrie des Wirbelschichtsystems entsprechend angepasst werden kann.

Fig. 3 zeigt eine weitere Ausführungsform des Wirbelschichtreaktorsystems der Erfindung, die nun insgesamt drei Reaktoren mit den Bezugszeichen 1, 2 und 20 umfasst (gleiche Bezugszeichen entsprechen erneut gleichen Bauteilen, d.h. analog zu den beiden oben erörterten Zeichnungen). Die Reaktoren 1 und 2 sind schnell fluidisierte Wirbelschichten, während Reaktor 20 eine blasenbildende stationäre Wirbelschicht repräsentiert und in Strömungsrichtung zwischen Reaktor 2 und Reaktor 1, genauer gesagt geht Reaktor 2 an seinem unteren Ende in den dritten Reaktor 20 über. Die Wirbelschicht in Reaktor 20 wird somit mit Partikeln aus Reaktor 2 gespeist, die wiederum über Abscheider 4 und Leitung 8 zirkulieren. Über die Verbindungsleitung 17 werden die Partikel zu Reaktor 1 weiter- bzw. zurückgeleitet.

Gasleitung 12 dient in diesem Fall hauptsächlich zur Fluidisierung des stationären Reaktors 20, während Reaktor 2 überwiegend über Leitung 14 und die in Reaktor 20 entstehenden Gasen fluidisiert wird. Nicht vollständig umgesetzte Brennstoffpartikel (wie z.B. langsam ent- oder vergasende Brennstoffe), die von Reaktor 2 in Reaktor 20 fallen, haben dort erneut die Möglichkeit, umgesetzt zu werden, was eine Erhöhung der Verweilzeit bedeutet.

Mit Bezugszeichen 29 ist eine im Wesentlichen nur Gas transportierende Verbindungsleitung zwischen den Reaktoren 1 und 2 gekennzeichnet, die ebenfalls das Ergebnis früherer Forschungen der Erfinder ist (siehe PCT/AT2011/000311) und einerseits dazu dient, die Druckverhältnisse in diesen beiden Reaktoren aufeinander abstimmen zu können. Andererseits hat diese Leitung 29 aber vor allem bei Einsatz dieses Wirbelschichtreaktorsystems für Vergasungsreaktionen große Vorteile, wobei neben der klassischen Kohlevergasung in letzter Zeit auch die Biomassevergasung stetig an Bedeutung gewinnt. Zur Wärmeerzeugung in einem Verbrennungs- oder Luftreaktor (in diesem Beispiel Reaktor 1) braucht nicht das aus dem Gaserzeugungsreaktor (oder auch "Brennstoffreaktor" oder "Vergasungsreaktor"; hier Reaktor 2) möglichst rein zu gewinnende Produktgas verbrannt zu werden, sondern es kann über die Verbindungsleitung 29 rohes Produktgas vom Gaserzeugungsreaktor in den Verbrennungsreaktor übergeleitet und zur Wärmeerzeugung genutzt werden. Um dabei den Feststoffzyklus des Wirbelschichtreaktorsystems nicht zu stören, transportiert diese Leitung im Wesentlichen nur Gas.

Aus diesem Grund mündet Leitung 29 am Kopf einer vertikalen Erweiterung des Reaktors 2 aus: Gemäß obiger Definition ist ein Wirbelschichtreaktor durch genau einen definierten Fluidisierungszustand gekennzeichnet. Somit ist Reaktor 20 durch die Höhe der stationären Wirbelschicht begrenzt und erstreckt sich nicht darüber hinaus. Vielmehr beginnt darüber bereits der Gasraum des schnell fluidisierten Reaktors 2. In der vertikalen Erweiterung des Reaktors herrscht daher eine inhärent geringe Teilchendichte, weswegen Leitung 29 praktisch keine Partikel transportiert. Dies kann durch Bauteile wie Filter, Zyklonabscheider oder dergleichen zusätzlich unterstützt werden.

Die Partikelleitung 17 zur Rückführung des globalen Feststoffstroms in Reaktor 1 mündet hier am Boden von Reaktor 20 seitlich aus und mündet von unten in den Boden von Reaktor 1 ein, d.h. die darin transportierten Teilchen werden von der Fluidisierung der Leitung 17 und von der unteren Fluidisierung 11 des ersten Reaktors effizient in Reaktor 1 weiterbefördert und dort von Fluidisierung 13 in den Reaktorraum 9 hochgerissen.

Die gezielt verstellbaren Strömungsregler gemäß vorliegender Erfindung sind wiederum mit Bezugszeichen 18 gekennzeichnet und definieren in diesem Fall einen "Zickzack"-Verlauf des Reaktorrohrs, verlängern also den Strömungsweg der schnell fluidisierten Wirbelschicht durch Reaktor 2 und unterteilen den Raum innerhalb des Reaktors erneut in Reaktionszonen 10. Mit Bezugszeichen 22 ist hier die unterste der Reaktionszonen gekennzeichnet, aus der die Wirbelschichtpartikel aus Reaktor 2 in den darunter liegenden Reaktor 20 herabfallen.

Die verstellbaren Strömungsregler 18 sind auch in diesem Beispiel als Schieber dargestellt, könnten aber genauso gut Klappen, Walzen oder dergleichen sein, die denselben Zweck erfüllen würden. Wiederum ist durch eine Verschiebung der einzelnen Strömungsregler nach innen oder außen die Strömungsgeschwindigkeit der Wirbelschicht an der Verengungsstelle und damit die Aufenthaltswahrscheinlichkeit von Partikeln ober- und unterhalb davon steuerbar.

In Fig. 4 wird eine alternative bevorzugte Ausführungsform des erfindungsgemäßen Wirbelschichtreaktorsystems mit drei Reaktoren gezeigt. In diesem Fall erfolgt die Abscheidung der aus den schnell fluidisierten Wirbelschichten ausgetragenen Partikel jeweils zweistufig: für Reaktor 1 in Abscheidern 3 und 23 und für Reaktor 2 in Abscheidern 4 und 24. Aus den beiden zusätzlichen Abscheidern 23 und 24 werden die Partikel über die Leitungen 25 bzw. 26 von Reaktor 1 an eine andere Stelle in Reaktor 2, die tiefer liegt als die Einmündungsstelle von Leitung 7, bzw. aus Reaktor 2 direkt in Reaktor 1, unter Umgehung von Reaktor 20, weitergeleitet.

Die verstellbaren Strömungsregler 18 sind hier schematisch als um eine horizontale Achse drehbare Walzen mit einem vertikalen Querschnitt in Form eines Kreissegments (mit einem Mittelpunktswinkel >180°) dargestellt, die paarweise an gegenüberliegenden Seiten von Reaktor 2 angeordnet sind. Die Walzen sind durchwegs in Erweiterungen der Reaktorwand untergebracht, die einen solchen Querschnitt aufweisen, dass für die Walzen eine Position existiert, in der ihre ebene Außenfläche mit der Reaktorwand im Wesentlichen fluchtet, d.h. in einer Ebene liegt. Werden sie jedoch gedreht, verengen sie zunehmend den Strömungsquerschnitt für die Wirbelschicht und unterteilen dadurch den Reaktorraum wiederum in Reaktionszonen 10 bzw. Reaktionszone 22.

Für derartige, in Erweiterungen der Reaktorwand, oder auch in Ausnehmungen einer ausreichend dicken Reaktorwand ohne Erweiterungen, "eingebettete" Strömungsregler mit ebenen Oberflächen - unabhängig davon, ob es sich um Walzen, Klappen oder andere Bauteile handelt - wird bevorzugt, dass die Strömungsregler in jener Position, in der sie den Strömungsquerschnitt nicht verengen, mit der Reaktorwand fluchten oder bündig damit abschließen, um auch eine ungehinderte, nicht umgelenkte Gasströmung innerhalb des Reaktors zu ermöglichen, wie sie bei herkömmlichen Wirbelschichtreaktorsystemen ohne gezielt verstellbare Strömungsregler gegeben wäre.

In der in Fig. 4 gezeigten Ausführungsform ist Reaktor 1 ebenfalls mit gezielt verstellbaren Strömungsreglern 21 versehen, die in diesem Fall als Schieber ausgeführt sind und den Reaktorraum in mehrere Reaktionszonen 9 unterteilen.

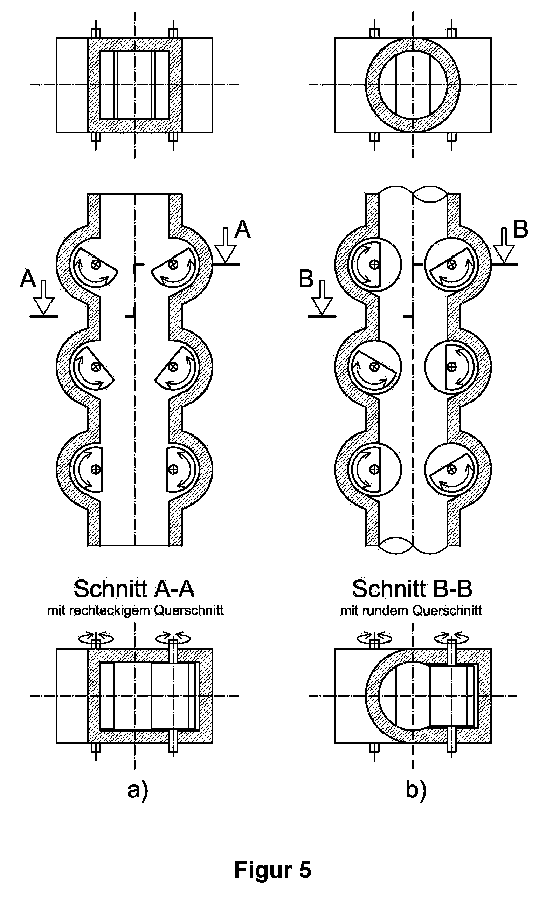

Die Fig. 5a und 5b zeigen Detailansichten von Reaktorwänden mit Erweiterungen, in denen Strömungsregler untergebracht sind, wie sie auch in der Ausführungsform aus Fig. 4 enthalten sind, d.h. Walzen mit einem vertikalen Querschnitt in Form eines Kreissegments mit einem Mittelpunktswinkel >180°. Beide Figuren umfassen je drei Bilder, wobei in der Mitte jeweils eine vertikale Querschnittsansicht eines Abschnitts der Reaktorwand gezeigt wird, der Paare solcher Strömungsregler in unterschiedlichen Positionen umfasst. Das oberste Bild ist jeweils eine Unteransicht des Reaktors, und das unterste Bild ist eine horizontale Querschnittsansicht entlang der Linie A-A bzw. B-B.

Fig. 5a zeigt einen Reaktor mit quadratischem und Fig. 5b einen mit kreisrundem Querschnitt, die an entsprechenden Stellen rechteckige Erweiterungen zur Aufnahme der Strömungsregler aufweisen. Die Strömungsregler sind, wie in Fig. 4, Paare einander gegenüberliegender Walzen, die entweder aufeinander abgestimmt, z.B. spiegelsymmetrisch wie in Fig. 5a, oder unabhängig voneinander, z.B. wie in Fig. 5b, gedreht werden können, um den Strömungsquerschnitt entsprechend zu verändern.

Es versteht sich, dass jegliche Strömungsregler gemäß vorliegender Erfindung nicht unbedingt paarweise vorgesehen werden müssen, sondern natürlich auch einzeln zum Einsatz kommen können. Die paarweise Verwendung hat allerdings den Vorteil, dass die Strömungsregler, bei aufeinander abgestimmter Positionsänderung, kleinere Dimensionen aufweisen können, um eine gewünschte Verengung des Strömungsquerschnitts zu bewirken.

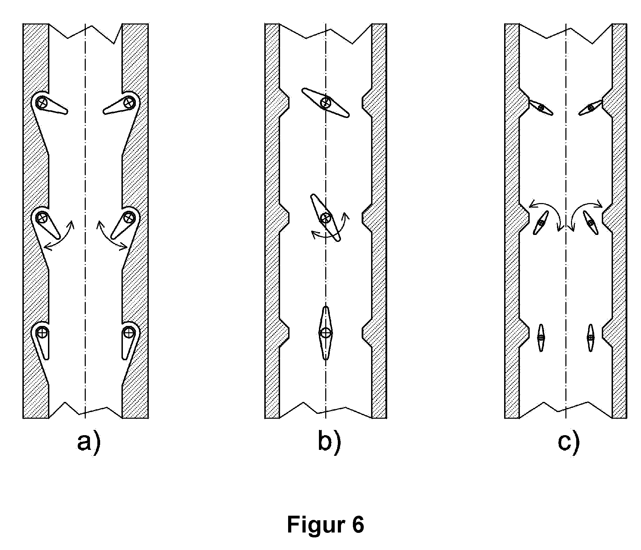

Fig. 6 zeigt Teilansicht dreier weiterer Ausführungsformen eines erfindungsgemäßen Wirbelschichtreaktors mit verstellbaren Strömungsreglern in unterschiedlichen Positionen. In Fig. 6a sind Paare einander gegenüberliegender, um eine horizontale Achse verschwenkbarer Klappen dargestellt, die in entsprechenden Ausnehmungen der Reaktorwand untergebracht sind. Die Fig. 6b und 6c zeigen jeweils eine Kombination aus bekannten, nicht verstellbaren Strömungsreglern in Form von paarweisen Ausbuchtungen der Reaktorwand und gezielt verstellbaren Strömungsreglern gemäß vorliegender Erfindung, die jeweils auf gleicher Höhe vorgesehen sind. Davon zeigt Fig. 6b eine Ausführungsform, bei der zwischen einem Paar Ausbuchtungen eine um eine horizontale Achse um 360° drehbare Klappe vorgesehen ist, während in Fig. 6c zwischen den paarweisen Ausbuchtungen auch Paare von derartigen, hier allerdings kleiner dimensionierten Klappen montiert sind. Aus dieser Darstellung geht erneut der obige Vorteil des Vorsehens von Paaren aufeinander abgestimmt verstellbarer Strömungsregler, d.h. die Möglichkeit, die Dimensionen zu verkleinern, hervor.

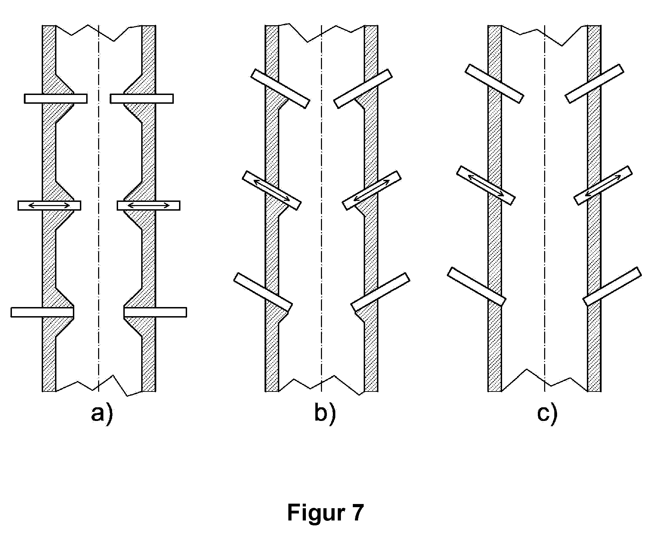

In Fig. 7 sind Paare von einander gegenüberliegenden Schiebern als gezielt verstellbare Strömungsregler in einer Reaktorwand dargestellt. Die Schieber erstrecken sich hier jeweils durch die Reaktorwand hindurch, können aber vorzugsweise auch in einer entsprechend dicken Reaktorwand oder einer entsprechenden Erweiterung derselben untergebracht ("eingebettet") sein, um die Reaktorwand nicht aufwändig nach außen abdichten zu müssen. Die Fig. 7a und 7b zeigen jeweils Schieber, die mit bekannten, nicht verstellbaren Strömungsreglern in Form von inneren Ausbuchtungen der Reaktorwand zusammenwirken. In Fig. 7a erstreckt sich jeweils ein Schieber waagrecht durch eine Ausbuchtung hindurch, während in Fig. 7b der Schieber oberhalb einer Ausbuchtung vorgesehen ist und zudem einen spitzen Winkel mit der Waagrechten einnimmt. In Fig. 7c sind schließlich dieselben Schieber wie in Fig. 7b, allerdings ohne Ausbuchtung der Reaktorwand dargestellt.

## Patentansprüche

1. Wirbelschichtreaktorsystem, umfassend einen oder mehrere Wirbelschichtreaktoren (1, 2, 20) zur Durchführung chemischer oder physikalischer Reaktionen, wovon zumindest ein Reaktor als schnell fluidisierter Reaktor zum Betrieb als zirkulierende Wirbelschicht ausgeführt ist und am oberen Ende einen Fluidauslass (5, 6), einen Partikelabscheider (3, 4) und eine damit verbundene Partikelleitung (7, 8) zur Rückführung abgeschiedener Wirbelschichtpartikel in denselben oder einen weiteren Reaktor umfasst, wobei in zumindest einem schnell fluidisierten Reaktor ein oder mehrere Strömungsregler (18, 21) vorgesehen sind, um darin voneinander getrennte Reaktionszonen (9, 10, 22) zu erzeugen,
**dadurch gekennzeichnet, dass** zur Regelung der Strömungsverhältnisse in den Reaktionszonen (9, 10, 22) einer oder mehrere der Strömungsregler (18, 21) von außerhalb des Systems gezielt verstellbar ist/sind.

2. Wirbelschichtreaktorsystem nach Anspruch 1, **dadurch gekennzeichnet, dass** die horizontale Querschnittsfläche des Reaktors auf Höhe eines gezielt verstellbaren Strömungsreglers (18, 21) durch das Verstellen dieses Strömungsreglers veränderbar ist.

3. Wirbelschichtreaktorsystem nach Anspruch 1 oder 2, **dadurch gekennzeichnet, dass** zumindest einer der gezielt verstellbaren Strömungsregler händisch verstellbar ist.

4. Wirbelschichtreaktorsystem nach Anspruch 1 oder 2 oder, wenn mehr als ein gezielt verstellbarer Strömungsregler vorhanden ist, Anspruch 3, **dadurch gekennzeichnet, dass** zumindest einer der gezielt verstellbaren Strömungsregler motorgetrieben ist.

5. Wirbelschichtreaktorsystem nach einem der vorangegangenen Ansprüche, **dadurch gekennzeichnet, dass** die gezielt verstellbaren Strömungsregler an oder in der jeweiligen Reaktorwand drehbar, verschwenkbar und/oder verschiebbar gelagert sind.

6. Wirbelschichtreaktorsystem nach einem der vorangegangenen Ansprüche, **dadurch gekennzeichnet, dass** sowohl gezielt verstellbare als auch ortsfest montierte Strömungsregler (18, 21) vorgesehen sind.

7. Wirbelschichtreaktorsystem nach einem der vorangegangenen Ansprüche, **dadurch gekennzeichnet, dass** es zumindest zwei Reaktoren (1, 2) umfasst, die beide als schnell fluidisierte Reaktoren ausgeführt sind, wobei eine Partikelleitung (7) den Partikelabscheider (3) des ersten Reaktors (1) mit dem zweiten Reaktor (2) verbindet, eine Partikelleitung (8) vom Partikelabscheider (4) des zweiten Reaktors (2) in den zweiten Reaktor (2) zurückführt und eine Partikelleitung (17) in den ersten Reaktor zurückführt, wobei zumindest im zweiten Reaktor (2) ein oder mehrere gezielt verstellbare Strömungsregler vorgesehen sind.

8. Wirbelschichtreaktorsystem nach Anspruch 7, **dadurch gekennzeichnet, dass** in beiden Reaktoren (1, 2) jeweils ein oder mehrere gezielt verstellbare Strömungsregler vorgesehen sind.

9. Wirbelschichtreaktorsystem nach einem der vorangegangenen Ansprüche, **dadurch gekennzeichnet, dass** zumindest eine Partikelleitung (7, 8) oberhalb zumindest eines Strömungsreglers (18, 21) in den jeweiligen Reaktor einmündet.

10. Wirbelschichtreaktorsystem nach einem der Ansprüche 7 bis 9, **dadurch gekennzeichnet, dass** zwei der Reaktoren zusätzlich durch eine im Wesentlichen nur Gas transportierende Leitung (29) miteinander verbunden sind.

## Claims

1. A fluidized-bed reactor system comprising one or more fluidized bed reactors (1, 2, 20) for carrying out chemical or physical reactions, wherein at least one reactor is implemented as a fast fluidized reactor to be operated as a circulating fluidized bed and comprises, at the upper end, a fluid outlet (5, 6), a particle separator (3, 4), and a particle line (7, 8) connected therewith to feed back separated fluidized-bed particles into the same or another reactor, wherein one or more flow controllers (18, 21) are provided in at least one fast fluidized reactor in order to create separate reaction zones (9, 10, 22) therein,
**characterized in that** one or more of the flow controllers (18, 21) are accurately adjustable from outside of the system to control the flow conditions in the reaction zones (9, 10, 22).

2. The fluidized-bed reactor system of claim 1, **characterized in that** the horizontal cross-sectional area of the reactor at the height of an accurately adjustable flow controller (18, 21) is changeably by adjusting the flow controller.

3. Fluidized-bed reactor system of claim 1 or 2, **characterized in that** at least one of the accurately adjustable flow controllers can be adjusted by hand.

4. Fluidized-bed reactor system of claim 1 or 2 or, if more than one accurately adjustable flow controller is present, claim 3, **characterized in that** at least one of the accurately adjustable flow controllers is driven by a motor.

5. Fluidized-bed reactor system of any one of the preceding claims, **characterized in that** the accurately adjustable flow controllers are supported rotatably, swivellably and/or slidably on or in the respective reactor wall.

6. Fluidized-bed reactor system of any one of the preceding claims, **characterized in that** accurately adjustable as well as locally fixed flow controllers (18, 21) are provided.

7. Fluidized-bed reactor system of any one of the preceding claims, **characterized in that** it comprises at least two reactors (1, 2), both implemented as fast fluidized reactors, wherein a particle line (7) connects the particle separator (3) of the first reactor (1) with the second reactor (2), a particle line (8) of particle separator (4) of the second reactor (2) leads back into the second reactor (2) and a particle line (17) leads back into the first reactor, wherein at least in the second reactor (2) one or more accurately adjustable flow controllers are provided.

8. Fluidized-bed reactor system of claim 7, **characterized in that** in in each of the two reactors (1, 2) one or more accurately adjustable flow controllers are provided.

9. Fluidized-bed reactor system of any of the preceding claims, **characterized in that** at least one particle line (7, 8) joins the respective reactor above at least one flow controller (18, 21).

10. Fluidized-bed reactor system of any of the claims 7 to 9, **characterized in that** two of the reactors are additionally connected to each other by a line (29) substantially transporting only gas.

## Revendications

1. Système de réacteur à lit fluidisé, comprenant un ou plusieurs réacteurs (1, 2, 20) pour effectuer des réactions chimiques ou physiques, dont au moins un réacteur étant réalisé sous forme de réacteur rapidement fluidisé pour fonctionner comme lit fluidisé circulant, et comprenant à l'extrémité supérieure une sortie de fluide (5, 6), un séparateur de particules (3, 4) et un conduit de particules (7, 8) relié audit séparateur pour reconduire des particules séparées du lit fluidisé dans le même ou un autre réacteur, dans au moins un réacteur rapidement fluidisé étant prévu un ou plusieurs régulateurs de débit (18, 21) pour créer, à l'intérieur, des zones de réaction (9, 10, 22) séparées les unes des autres,
**caractérisé en ce qu'**un ou plusieurs des régulateurs de débit (18, 21) peut/peuvent être réglé(s) de façon ciblée depuis l'extérieur du système pour réguler les conditions de débit dans les zones de réaction (9, 10, 22).

2. Système de réacteur à lit fluidisé selon la revendication 1, **caractérisé en ce que** la surface de section horizontale du réacteur peut être changée au niveau d'un régulateur de débit (18, 21) pouvant être réglé de façon ciblée, grâce au règlement dudit régulateur de débit.

3. Système de réacteur à lit fluidisé selon la revendication 1 ou 2, **caractérisé en ce qu'**au moins un desdits régulateurs de débit pouvant être réglés de façon ciblée peut être réglé manuellement.

4. Système de réacteur à lit fluidisé selon la revendication 1 ou 2 ou, dans le cas de plus d'un régulateur de débit pouvant être réglé de façon ciblée, la revendication 3, **caractérisé en ce qu'**au moins un des régulateurs de débit pouvant être réglés de façon ciblée est motorisée.

5. Système de réacteur à lit fluidisé selon une des revendications précédentes, **caractérisé en ce que** les régulateurs de débit pouvant être réglés de façon ciblée reposent au niveau de ou dans la respective paroi du réacteur de façon tournable, pivotable et/ou déplaçable.

6. Système de réacteur à lit fluidisé selon une des revendications précédentes, **caractérisé en ce qu'**il sont prévus et des régulateurs de débit (18, 21) pouvant être réglé de façon ciblée et des régulateur de débit étant montés de façon inamovible.

7. Système de réacteur à lit fluidisé selon une des revendications précédentes, comprenant au moins deux réacteurs (1, 2) étant tous les deux réalisés sous forme de réacteur rapidement fluidisé, un conduit de particules (7) reliant le séparateur de particules (3) du premier réacteur (1) au deuxième réacteur (2), un conduit de particules (8) du séparateur de particules (4) du deuxième réacteur (2) rejoignant le premier réacteur, dans au moins le deuxième réacteur étant prévu un ou plusieurs régulateurs de débit pouvant être réglé(s) de façon ciblée.

8. Système de réacteur à lit fluidisé selon la revendication 7, **caractérisé en ce que** dans les deux réacteurs (1, 2) est/sont prévu(s) respectivement un ou plusieurs régulateurs de débit pouvant être réglé(s) de façon ciblée.

9. Système de réacteur à lit fluidisé selon une des revendications précédentes, **caractérisé en ce qu'**au moins un conduit de particules (7,8) débouche dans le réacteur respectif au-dessus d'au moins un régulateur de débit (18, 21).

10. Système de réacteur à lit fluidisé selon une des revendications 7 à 9, **caractérisé en ce que** deux des réacteurs sont ultérieurement reliés entre eux par un conduit (29) essentiellement transportant uniquement du gaz.
